# EUROPÄISCHE PATENTSCHRIFT

(11) **EP 0 519 360 B1**
(45) Veröffentlichungstag und Bekanntmachung des Hinweises auf die Patenterteilung: **22.01.1997**
(21) Anmeldenummer: 92110001.2
(22) Anmeldetag: 13.06.1992
(51) Int. Cl.: G10L 5/06

(54) **Einrichtung und Verfahren zum Erkennen von Sprache**
Apparatus and method for speech recognition
Dispositif et procédé pour la reconaissance de la parole

(30) Priorität: 20.06.1991 DE 4120308
(43) Veröffentlichungstag der Anmeldung: 23.12.1992
(73) Patentinhaber: Alcatel SEL Aktiengesellschaft, D-70435 Stuttgart (DE); ALCATEL N.V., NL-1077 XX Amsterdam (NL)
(72) Erfinder: Hackbarth, Heidi, W-7015 Korntal-Münchingen (DE)
(74) Vertreter: Pohl, Herbert, Dipl.-Ing

(56) Entgegenhaltungen:
- GB-A- 2 230 370
- US-A- 4 949 382
- NEURAL NETWORKS, Band 4, Nr. 6, 1991, Seiten 711-722, Pergamon Press plc, Elmsford, NY, US; M.D. TOM et al.: "Short utterance recognition using a network with minimum training"

## Beschreibung

Die Erfindung betrifft eine Einrichtung mit einem neuronalen Netzwerk und ein Verfahren zum Erkennen von Sprache bei sukzessiver Erweiterung des Referenzwortschatzes.

Aus der Patentanmeldung GB 22 30 370 ist eine Methode und eine Vorrichtung zur Spracherkennung bekannt. Die Vorrichtung führt eine Spracherkennung unter Verwendung eines neuronalen Netzes durch. Zur Spracherkennung wird eine Mustererkennungseinheit, die mit dem neuronalen Netz verbunden ist verwendet. Das neuronale Netz wiederum beinhaltet ein Mult-Layer Perceptron (MLP) die von einem sogenannten dynamic time warping Algorithmus kontrolliert wird.

Es ist bekannt, zuer Mustererkennung sogenannte neuronale Netze zu verwenden, die eine hierarchische Netzwerkstruktur aufweisen. In solchen Netzwerken wird jedes Element einer höheren Schicht von Elementen einer niedrigeren Schicht beeinflußt, wobei typischerweise jedes Element einer Schicht mit allen Elementen der darunterliegenden Schicht verbunden ist (z.B. A. Krause, H. Hackbarth, "Scaly Artificial Neural Networks for Speaker-Independent Recognition of Isolated Words", IEEE Proceedings of ICASSP 1989, Glasgow, UK, mit weiteren Literaturhinweisen). Neuronale Netzwerke bieten bei der Spracherkennung im Vergleich zu konventionellen Verfahren den Vorteil der inhärenten Robustheit gegen Störgeräusche.

Ein Nachteil der neuronalen Techniken liegt jedoch prinzipiell in der für heute verfügbare Rechner relativ langen Trainingsphase. Ist nämlich im realen Gebrauch eines neuronalen Spracherkenners eine Erweiterung des Wortschatzes auch um nur ein Wort beabsichtigt, muß das gesamte Netzwerk neu trainiert werden. Es kommen zusätzliche Ausgangselement hinzu, und alle Gewichtsparameter werden erneuert. Das bedeutet, daß ein neu in den Wortschatz aufgenommenes Wort erst nach Abschluß dieser off-line erfolgenden Lernphase erkannt werden kann, die unter Umständen mehrere Stunden dauert.

Als konventionelles Verfahren zur Mustererkennung ist unter anderen die sogenannte Dynamische Programmierung bekannt. Dabei wird ein zum Lernen des Spracherkenners erstmals gesprochenes Wort als Referenzmuster unmittelbar in einem Sprachmusterspeicher abgelegt (z.B. H. Ney, "The Use of a One-Stage Dynamic Programming Algorithm for Connected Word Recognition", IEEE Transactions on Acoustics, Speech, and Signal Processing, April 1984, mit weiteren Literaturhinweisen). Dieses Verfahren bietet den Vorteil, daß das Referenzmuster binnen weniger Sekunden für eine Klassifikation durch den Spracherkenner zur Verfügung steht.

Ein Nachteil der Dynamischen Programmierung liegt jedoch in der im Vergleich zu den neuronalen Verfahren höheren Empfindlichkeit gegen Störgeräusche.

Die Erkennung in Echtzeit ist bei beiden Methoden für kleine Wortschätze (ca. 70 bis 100 Wörter, abhängig von der Prozessorleistung) gewährleistet.

Der Erfindung liegt die Aufgabe zugrunde, ein robustes Spracherkennungssystem zu schaffen, das bei einer sukzessiven Erweiterung des Wortschatzes um einzelne Wörter oder Wortgruppen sofort einsatzbereit ist.

Erfindungsgemäß wird diese Aufgabe durch eine Einrichtung mit den Merkmalen des Patentanspruchs 1 gelöst. Ein Verfahren zur Lösung der vorgenannten Aufgabe ist in Patentanspruch 2 angegeben.

Die Wortschatzerweiterung auf der Basis des neuronalen Netzwerkes erfordert ein langwieriges, bis zu einigen Stunden dauerndes Neutraining des gesamten Netzwerkes. Der konventionelle Spracherkenner, der nach dem Prinzip der Dynamischen Programmierung arbeitet, hat die neu hinzugekommenen Wortmuster zur sofortigen Klassifikation als Referenz verfügbar.

In den Patentansprüchen 3 und 4 sind zwei Varianten des Verfahrens angegeben. So kann der konventionelle Spracherkenner zum Wiedererkennen eines während der Trainingsphase des neuronalen Netzwerkes gesprochenen Wortes entweder nur für die neu hinzugekommenen Wortmuster (Patentanspruch 3) oder für alle Wortmuster (Patentanspruch 4) aktiviert werden, bis das - ansonsten robustere - neuronale Netzwerk auf das erweiterte Wortmusterset trainiert ist und wieder die Erkennung des vollständigen, jetzt erweiterten Wortschatzes übernimmt (Patentanspruch 5). Mit Hilfe der Erfindung ist es möglich, auch während der Trainingsphase des neuronalen Netzwerkes Sprache zu erkennen.

Als ein Arnsführungsbeispiel der Erfindung wird die Telefonwahl per Spracheingabe anhand zweier Ablaufdiagramme erläutert.
- Fig. 1: zeigt als Fall 1 das allererste Vorsprechen des Wortschatzes N;
- Fig. 2: zeigt als Fall 2 die Erweiterung durch den Wortschatz M.

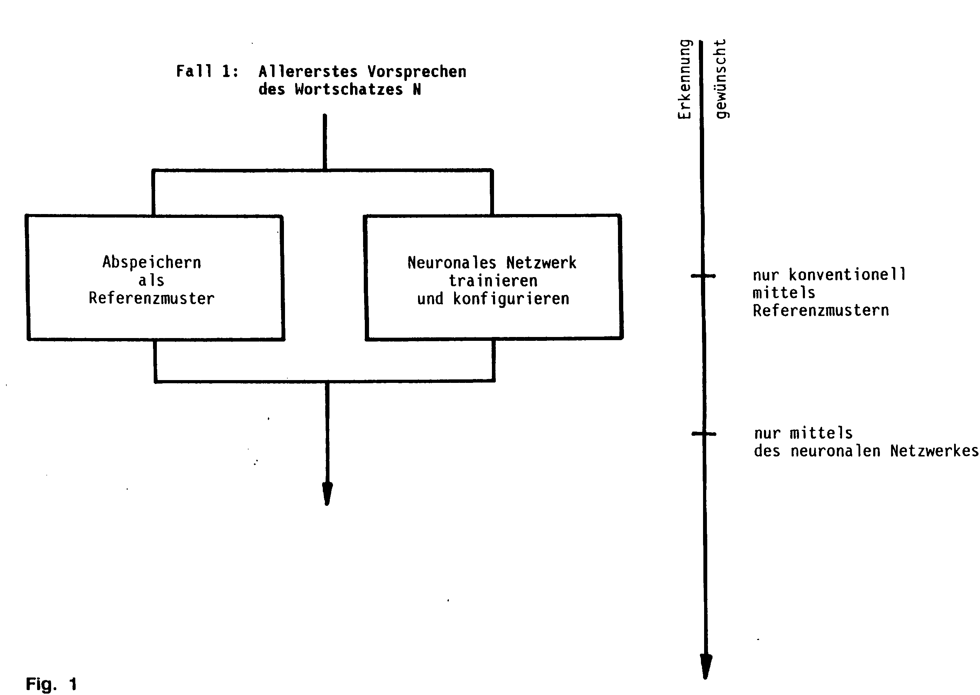

Beim allerersten Vorsprechen des Wortschatzes N (Fig. 1) werden die vom Benutzer (eventuell mehrmals) gesprochenen Namen in Form von Referenzmustern in einem Sprachmusterspeicher abgespeichert. Dies erfolgt zeitlich in der Größenordnung von Sekunden. Parallel dazu werden die neu gesprochenen Namen im neuronalen Netzwerk bearbeitet. Hierbei wird das neuronale Netzwerk über einen Zeitraum von mehreren Stunden trainiert und konfiguriert. Ein während des Trainings des neuronalen Netzwerkes zum Wählen einer Telefonverbindung durch Sprache eingegebener Name aktiviert den nach dem Prinzip der Dynamischen Programmierung arbeitenden konventionellen Erkenner, der den aktuell gesprochenen Namen mit allen bisher im Sprachmusterspeicher abgelegten Referenzmustern vergleicht und eine Klassifikation vornimmt. Das Training des neuronalen Netzwerks läuft als Hintergrundprogramm weiter. Nach Abschluß des Trainings und Konfiguration des neuronalen Netzwerkes erfolgt die Erkennung der zum Wählen einer Telefonverbindung durch Sprache eingegebenen Namen ausschließlich mittels des geräuschrobusten neuronalen Netzwerkes.

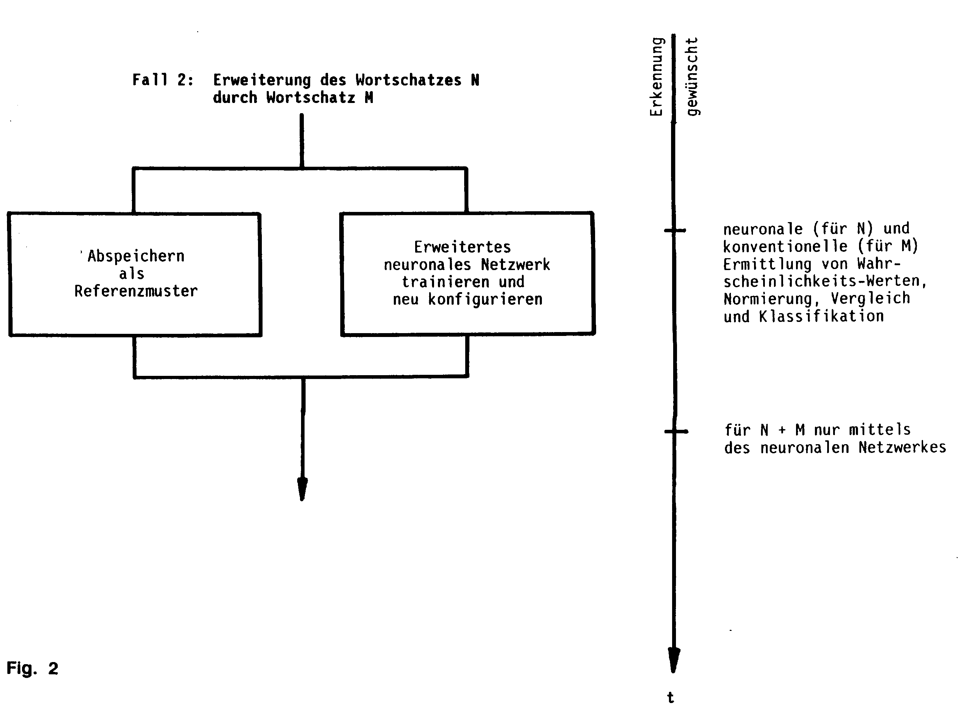

Soll nun die Liste der anzuwählenden Teilnehmer N, wie in Fig. 2 dargestellt, um M Namen erweitert werden, werden die vom Benutzer gesprochenen Namen wiederum als Referenzmuster abgespeichert. Parallel hierzu ist die Ergänzung der Ausgangsschicht des neuronalen Netzwerkes um M neuronale Elementen der Aufbau der zugehörigen Verbindungen sowie ein erneutes Training der Gewichte auf den Verbindungen zwischen allen Elementen erforderlich. Diese Neukonfiguration des neuronalen Netzwerkes dauert wiederum mehrere Stunden. Hierbei bleibt das bisherige, auf N trainierte neuronale Netz erhalten.

Will der Benutzer während dieser Lernphase die automatische Telefonwahl in Anspruch nehmen und spricht einen Namen, wird das Neu-Training unterbrochen und beide Erkenner werden aktiviert. Zum einen vergleicht das "alte" neuronale Netz den aktuell gesprochenen Namen mit dem N-Wortschatz. Das Ergebnis ist eine Worthypothese mit einer Wahrscheinlichkeits-Bewertung. Zum anderen wird der aktuell gesprochene Name mit den M neu hinzugekommenen Referenzmustern im Sprachmusterspeicher auf konventionelle Weise verglichen und auch dort eine Hypothese mit einer Wahrscheinlichkeits-Bewertung generiert. Hierbei bestimmt der klassische Algorithmus, mit welchem der neu hinzugekommenen Namen der aktuelle am besten und wie gut übereinstimmt. Der - nach entsprechender Normierung - größere dieser beiden Werte determiniert das wahrscheinlich gesprochene Wort, so daß man schließlich einen einzigen Kandidaten für den gesprochenen Namen erhält. Nach Abschluß der Lernphase übernimmt das robustere neuronale Netzwerk wieder die Erkennung des gesamten Wortschatzes N+M.

Das beschriebene Verfahren läßt folgende Variante zu: Während das neuronale Netzwerk um den Wortschatz M erweitert und neu trainiert wird, übernimmt bei einer Spracheingabe (Inanspruchnahme der automatischen Telefonwahl) der konventionelle Erkenner die Klassifikation des gesamten Wortschatzes, d.h. den Vergleich der Referenzmuster für N und M. Das Verfahren läuft dann so ab, wie es anhand von Fig. 1 im Zusammenhang mit dem allersten Vorsprechen des Wortschatzes beschrieben wurde. Das bisherige, auf N trainierte neuronale Netzwerk braucht dabei nicht erhalten zu bleiben. Auch entfallen die aufwendigen Wahrscheinlichkeits-Bewertungen und deren Normierung zum Zwecke der Kombination der beiden Verfahren. Allerdings kann diese Vereinfachung zu einer Verminderung der Robustheit gegen Störgeräusche führen.

## Patentansprüche

1. Spracherkennungseinrichtung mit einem neuronalen Netzwerk, bei der neben dem neuronalen Netzwerk ein nach dem Prinzip der Dynamischen Programmierung arbeitender konventioneller Erkenner vorhanden ist, dadurch gegkennzeichnet,
daß der konventionelle Erkenner alle neu gesprochenen, in den Wortschatz der Einrichtung aufzunehmenden Wörter, parallel zu deren Bearbeitung im neuronalen Netzwerk, in Form von Referenzmustern unmittelbar in einem Sprachmusterspeicher abspeichert, der für eine sofortige Klassifikation der Referenzmuster durch den konventionellen Erkenner zugriffsbereit ist.

2. Spracherkennungsverfahren bestehend aus der Kombination von neuronalen und konventionellen Verfahren,
dadurch gekennzeichnet,
daß bei sukzessiver Erweiterung des Referenz-Wortschatzes ein zum Lernen der Spracherkennungseinrichtung erstmals gesprochenes Wort
a) als Referenzmuster in einem Sprachmusterspeicher abgelegt wird und für eine sofortige Klassifikation durch einen nach dem Prinzip der Dynamischen Programmierung arbeitenden konventionellen Erkenner zur Verfügung steht, und
b) gleichzeitig das Training und die Neukonfiguration des neuronalen Netzwerkes auslöst.

3. Verfahren nach Anspruch 2, dadurch gekennzeichnet, daß ein bereits bestehendes "altes" neuronales Netzwerk solange erhalten bleibt, bis das Training und die Neukonfiguration des erweiterten neuronalen Netzwerkes abgeschlossen ist, daß ein während des Trainings zum Wiedererkennen durch die Spracherkennungseinrichtung gesprochenes Wort eine Unterbrechung des Trainings des neuronalen Netzwerkes bewirkt und sowohl das bestehende neuronale Netzwerk aktiviert, das zu dem aktuell gesprochenen Wort einen Wahrscheinlichkeitswert aus dem bisherigen Wortschatz liefert, als auch den konventionellen Erkenner, der das aktuell gesprochene Wort mit den neuen Referenzmustern aus dem Sprachmusterspeicher vergleicht und ebenfalls einen Wahrscheinlichkeitswert ermittelt, und daß die Wahrscheinlichkeitswerte normiert und miteinander verglichen werden und zu einer Klassifikation führen.

4. Verfahren nach Anspruch 2, dadurch gekennzeichnet, daß ein während des Trainings des neuronalen Netzwerkes zum Wiedererkennen durch die Spracherkennungseinrichtung gesprochenes Wort nur den konventionellen Erkenner aktiviert, der das aktuell gesprochene Wort mit allen Referenzmustern aus dem Sprachmusterspeicher vergleicht und eine Klassifikation vornimmt.

5. Verfahren nach Anspruch 3 oder 4, dadurch gekennzeichnet, daß nach Abschluß des Trainings und der Neukonfiguration ausschließlich das neuronale Netzwerk die Erkennung des erweiterten Wortschatzes übernimmt.

## Claims

1. Speech-recognition device having a neural network, in which, besides the neural network, a conventional recogniser working on the dynamic programming principle is provided, characterised in that the conventional recogniser directly stores all newly spoken words to be added to the vocabulary of the device, simultaneously with their processing in the neural network, in the form of reference patterns, into a speech-pattern memory, which is accessible for immediate classification of the reference patterns by the conventional recogniser.

2. Process for recognising speech, comprising the combination of neural and conventional methods, characterised in that by successive extension of the reference vocabulary, a word spoken for the first time for training the speech-recognition device
a) is stored as a reference pattern in a speech-pattern memory and is available for immediate classification by a conventional recogniser working on the dynamic programming principle, and
b) simultaneously initiates the training and the reconfiguration of the neural network.

3. Process according to Claim 2, characterised in that an existing "old" network is preserved until the training and reconfiguration of the extended neural network is completed, that a word spoken during the training for recognition by the speech-recognition device causes an interruption of the training of the neural network and activates both the existing neural network, which provides a probability value from the existing vocabulary, and the conventional recogniser, which compares the current spoken word with the new reference patterns from the speech-pattern memory and also determines a probability value, and that the probability values are normalised and compared and result in a classification.

4. Process according to Claim 2, characterised in that a word spoken during the training of the neural network for recognition by the speech-recognition device activates only the conventional recogniser, which compares the current spoken word with all reference patterns from the speech-pattern memory and carries out a classification.

5. Process according to Claim 3 or 4, characterised in that after completion of the training and reconfiguration, the recognition of the extended vocabulary is effected exclusively by the neural network.

## Revendications

1. Dispositif de reconnaissance vocale comportant un réseau neuronal, dans lequel se trouve, outre le réseau neuronal, un appareil de reconnaissance classique fonctionnant suivant le principe de la programmation dynamique, caractérisé en ce que l'appareil de reconnaissance classique enregistre tous les mots nouvellement prononcés, devant être intégrés dans le glossaire du dispositif, directement dans une mémoire de modèles vocaux sous la forme de modèles de référence, parallèlement à leur traitement dans le réseau neuronal, ladite mémoire étant accessible à l'appareil de reconnaissance classique pour une classification immédiate des modèles de référence.

2. Procédé de reconnaissance vocale constitué par la combinaison de procédés neuronaux et classiques, caractérisé en ce que, lors d'une extension progressive du glossaire de référence, un mot prononcé pour la première fois, pour l'apprentissage de l'appareil de reconnaissance vocale :
a) est enregistré dans une mémoire de modèles vocaux comme modèle de référence, et est disponible pour une classification immédiate par un appareil classique fonctionnant suivant le principe de la programmation dynamique, et
b) déclenche simultanément l'apprentissage et la reconfiguration du réseau neuronal.

3. Procédé suivant la revendication 2, caractérisé en ce qu'un "ancien" réseau neuronal pré-existant reste présent jusqu'à ce que l'apprentissage et la reconfiguration du réseau neuronal élargi soient achevés, en ce qu'un mot prononcé pendant l'apprentissage pour la reconnaissance par l'appareil de reconnaissance vocale déclenche une interruption de l'apprentissage du réseau neuronal et active d'une part le réseau neuronal existant, qui fournit pour le mot prononcé actuellement une valeur de vraisemblance à partir du glossaire précédent, et d'autre part l'appareil de reconnaissance classique, qui compare le mot prononcé actuellement aux nouveaux modèles de référence de la mémoire de modèles vocaux, et donne également une valeur de vraisemblance, et en ce que les valeurs de vraisemblance sont normalisées, sont comparées l'une à l'autre et conduisent à une classification.

4. Procédé suivant la revendication 2, caractérisé en ce qu'un mot prononcé pendant l'apprentissage du réseau neuronal, pour la reconnaissance par l'appareil de reconnaissance vocal, n'active que l'appareil de reconnaissance classique, qui compare le mot prononcé actuellement à tous les modèles de références de la mémoire de modèles vocaux et procède à une classification.

5. Procédé suivant la revendication 3 ou 4, caractérisé en ce qu'une fois que l'apprentissage et la reconfiguration sont terminés, seul le réseau neuronal procède à la reconnaissance du glossaire étendu.
